# EUROPÄISCHE PATENTANMELDUNG

(11) **EP 2 353 833 A1**
(43) Veröffentlichungstag der Anmeldung: **10.08.2011**
(21) Anmeldenummer: 10015650.4
(22) Anmeldetag: 15.12.2010
(51) Int. Cl.: B29C 45/14, A47G 23/00

(54) **Kunststoffschale**

(30) Priorität: 10.02.2010 DE 202010002199 U
(71) Anmelder: Rotho Kunststoff AG, 5303 Würenlingen (CH)
(72) Erfinder: Thoma, Christian, 79774 Albbruck (DE)
(74) Vertreter: Lemcke, Brommer & Partner

(57) **Zusammenfassung**

Die vorliegende Erfindung betrifft eine Kunststoffschale mit einem im wesentlichen ebenen Boden 1 und einer oder mehreren, an den Boden 1 angeformten, von diesem ausgehend nach oben abgewinkelten oder abgebogenen Randfläche(n) 2, wobei die Kunststoffschale im Spritzgussverfahren hergestellt ist, und wobei der Boden 1 mit einer Textileinlage 4 belegt ist. Des Weiteren ist die Kunststoffschale zur Herstellung einer Schmelzverbindung mit der Textileinlage 4 an diese angespritzt.

## Beschreibung

Die Erfindung betrifft eine Kunststoffschale mit einem im Wesentlichen ebenen Boden und einer oder mehreren an den Boden angeformten, von diesem ausgehend nach oben abgewinkelten oder abgebogenen Randflächen nach dem Oberbegriff des Anspruchs 1.

Die Form des Bodens kann demnach rund, elliptisch, nierenförmig, stadionförmig oder dergleichen sein, so dass es nur eine umlaufende Randfläche gibt, oder aber quadratisch, rechteckig oder in Gestalt eines sonstigen Polygons vorliegen, so dass dann mehrere Randflächen den so geformten Boden umgeben. Die Randflächen selbst können im Wesentlichen eben geformt sein, so dass sie zur Bildung einer Schale vom Boden ausgehend nach oben abgewinkelt angeformt sind; in vielen Fällen wird es jedoch bevorzugt sein, die Randflächen in einem zylindrischen, konvexen oder konkaven Verlauf vom Boden ausgehend nach oben abgebogen auszuformen.

Die vorliegende Kunststoffschale ist im Spritzgussverfahren hergestellt, wobei ihr Boden als Besonderheit mit einer Textileinlage belegt ist.

Schalen der vorliegenden Art werden im Haushalt zur geordneten Ablage von Kleingegenständen, wie insbesondere Schlüsseln, Handys, Brillen etc. benutzt. Die Textileinlage, die den Boden dieser Kunststoffschalen belegt, verhindert dabei, dass die Gegenstände, die in der Schale abgelegt werden, auf eine Kunststoffoberfläche treffen. Denn dies ist vielen Benutzern sowohl haptisch als auch akustisch unangenehm. Ein harter Gegenstand, wie ein Schlüsselbund, der auf eine Kunststoffoberfläche trifft, erzeugt ein Klappergeräusch, das von Vielen als minderwertig missbilligt wird.

Ist der Boden der Kunststoffschale jedoch wie vorliegend mit einer Textileinlage belegt, beispielsweise einer Filzplatte oder einer nach Art einer Essplatz-Unterlage gewirkten und gegebenenfalls strukturierten Textilschicht, treffen die Gegenstände, die in der Schale abgelegt werden, auf die Textiloberfläche auf, wodurch ein gedämpftes, hochwertiges Geräusch entsteht und eine angenehme Haptik auch beim Wiederergreifen der Gegenstände sichergestellt ist.

Nach dem Stand der Technik ist das Aufbringen einer Textileinlage auf dem Boden einer solchen Kunststoffschale allerdings sehr aufwändig. Denn auch wenn der Zuschnitt der Textileinlage sowie das Spritzgießen der Kunststoffschale automatisiert erfolgen können, erfordert das Einkleben der Textileinlage in die Kunststoffschale notwendigerweise Handarbeit, die das fertige Produkt naturgemäß unverhältnismäßig verteuert.

Der vorliegenden Erfindung liegt daher die Aufgabe zugrunde, eine Kunststoffschale der eingangs genannten Art hinsichtlich ihrer einfachen und kostengünstigen Herstellung zu verbessern.

Diese Aufgabe ist durch eine Kunststoffschale mit den Merkmalen des Anspruchs 1 gelöst. Bevorzugte Ausgestaltungen und Weiterbildungen der erfindungsgemäßen Kunststoffschale sind in den Ansprüchen 2 bis 7 niedergelegt.

Nach der vorliegenden Erfindung ist demnach die Kunststoffschale an die Textileinlage angespritzt, um eine Schmelzverbindung zwischen diesen beiden Teilen herzustellen. Dies bedeutet, dass die Textileinlage in das Spritzgusswerkzeug zur Herstellung der Kunststoffschale eingelegt und der flüssige Kunststoff an die Textileinlage angespritzt wird, so dass sich beim Erstarren des flüssigen Kunststoffs eine Schmelzverbindung mit der Textileinlage ausbildet. Die Textileinlage ist hierdurch unlösbar mit der eigentlichen Kunststoffschale verbunden, was nebenbei Qualitätsprobleme ausschließt, die im Stand der Technik mitunter durch fehlerhafte oder qualitativ minderwertig hergestellte Klebverbindungen entstehen konnten. In diesem Zusammenhang ist zu erwähnen, dass als zusätzlicher Vorteil der vorliegenden Erfindung die Verwendung von separatem Klebstoff entfällt.

Ebenfalls vollständig entfallen kann der bisher in Handarbeit vorzunehmende Arbeitsgang des Einklebens der Textileinlage in die Kunststoffschale. Dies wird nunmehr automatisiert im Spritzgusswerkzeug, beim Herstellen der Kunststoffschale bewerkstelligt.

Nach einer besonders bevorzugten Weiterbildung der vorliegenden Erfindung ist zwischen dem Boden und der Randfläche bzw. den Randflächen der Kunststoffschale eine umlaufende Nut vorgesehen. Diese umlaufende Nut sorgt für eine definierte Begrenzung des Bodens, der mit der Textileinlage belegt ist, und vereinfacht so eine saubere Umrandung der Textileinlage. Dies wird bevorzugterweise solcherart ausgeführt, dass der Rand, oder im Fall einer polygonförmigen Textileinlage, mehrere oder alle Ränder derselben in die Nut hinein nach unten abgebogen werden. Es bildet sich an diesem Rand der Textileinlage demnach eine Abkantung nach unten aus, die für eine saubere optische Begrenzung der Textileinlage und damit zur Abgrenzung zwischen dem Boden und den Randflächen der Schale sorgen.

Neben dem optischen Vorteil der Abkantung an sich gegenüber einer in herkömmlicher Weise eingelegten oder gar aufgeklebten Textileinlage, ergibt sich hierdurch der weitere Vorteil, dass der Zuschnitt der Textileinlage nicht notwendigerweise sehr exakt passen muss. Etwaige Fertigungstoleranzen oder ― je nach verwendetem Textilmaterial ― Ausfransungen der Randbereiche werden in die Nut hineingebogen und bleiben am fertigen Produkt unsichtbar.

Eine weitere besonders bevorzugte Ausgestaltung der vorliegenden Erfindung besteht darin, dass die Textileinlage aus mehreren, insbesondere zwei Schichten besteht. Hierbei ist es zweckmäßig, wenn die oberste Schicht der mehrschichtigen Textileinlage aus einem abriebfesten Material, insbesondere aus Leder oder Kunstleder besteht. Die oder eine darunterliegende Schicht wird dann zweckmäßigerweise aus einem weichelastischen Material gebildet, beispielsweise Schaumstoff oder Moosgummi. In Kombination der beiden Schichten ergibt sich eine sehr hochwertige Anmutung, insbesondere haptisch, da sich die haltbare, abriebfeste Deckschicht der Textileinlage aufgrund der darunterliegenden weichelastischen Schicht sehr weich und nachgiebig anfühlt. Auch das Geräusch beim Hineinlegen von harten Gegenständen, insbesondere einem Schlüsselbund oder einem Handy, ist dann sehr gedämpft und wirkt sehr hochwertig.

Bei einer mehrschichtigen Ausbildung der Textileinlage ist es zweckmäßig, die Kunststoffschale mit einer den Boden umgebenden, umlaufenden Nut zu versehen und nur die Deckschicht bzw. oberste Schicht der Textileinlage mit Rändern zu versehen, die nach unten in die Nut hinein abgebogen werden können. Dies ermöglicht auch dann, wenn die mehrschichtige Textileinlage relativ dick ausfällt, eine gleichwohl schmale Ausbildung der Nut.

Die Textileinlage, die schon beim Herstellen Teil der erfindungsgemäßen Kunststoffschale wird, kann plattenförmig ausgebildet sein und insbesondere aus Filz, Moosgummi, Leder und dergleichen, gegebenenfalls mit darunterliegenden weichelastischen Materialien, oder aus einer Kombination dieser Materialien bestehen. Es sind jedoch im Rahmen der vorliegenden Erfindung alle möglichen textilen Materialien und Kombinationen von diesen denkbar, wie gewebte, gewirkte oder gestrickte Stoffe, die beispielsweise mit Moosgummi oder Filz kombiniert werden. Auch die unterschiedlichsten optischen Effekte können mit den Textileinlagen erzielt werden.

Ein Ausführungsbeispiel einer erfindungsgemäßen Kunststoffschale wird im folgenden anhand der beigefügten Zeichnungen näher beschrieben und erläutert. Es zeigen:
- Figur 1: eine erfindungsgemäß ausgebildete Kunststoffschale in perspektivischer Ansicht von oben;
- Figur 2: eine erfindungsgemäß ausgestaltete Kunststoffschale in perspektivischer Ansicht von unten;
- Figur 3: das Detail X aus Figur 1;
- Figur 4: einen Schnitt entlang der Linie A ― A aus Figur 3.

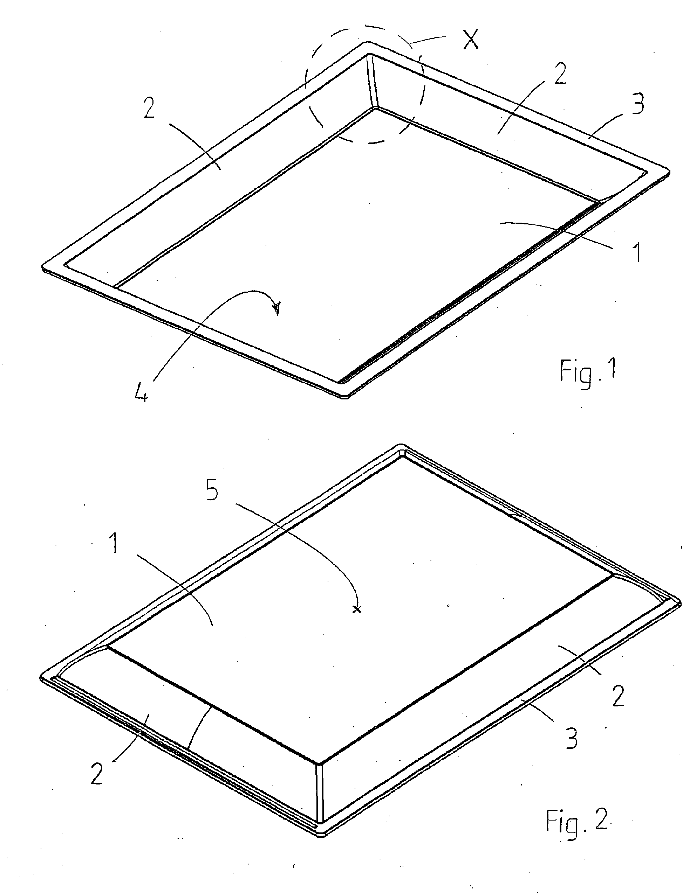

Figur 1 zeigt das hier vorgestellte Ausführungsbeispiel einer erfindungsgemäß ausgestalteten Kunststoffschale in einer perspektivischen Ansicht von oben. Die Kunststoffschale besitzt eine rechteckige Grundfläche und wird im wesentlichen durch einen rechteckig ausgebildeten, ebenen Boden 1 und vier an diesen angeformten, nach oben abgewinkelten Randflächen 2 gebildet. Die Randflächen 2 setzen sich oben umlaufend in eine wiederum eben ausgebildete Auskragung 3 fort.
Figur 2, eine perspektivische Darstellung der Kunststoffschale aus Figur 1 von unten, zeigt den spritzgegossenen Kunststoffteil der Kunststoffschale, während Figur 1 auch eine den Boden 1 der Kunststoffschale bedeckende Textileinlage 4 zeigt. Wie unten näher ausgeführt wird, besteht die Textileinlage 4 vorliegend aus zwei Schichten, wobei in Figur 1 die obere Schicht der Textileinlage 4 sichtbar ist, die im vorliegenden Fall beispielsweise aus Leder besteht.

In Figur 2 ist außerdem gut zu erkennen, dass die Randflächen 2 der Kunststoffschale nicht eben ausgebildet sind, sondern eine konvex nach außen gewölbte Form aufweisen. Ein hier nur symbolisch angedeuteter Anspritzpunkt 5 soll verdeutlichen, dass der in Figur 2 sichtbare Kunststoffteil der Kunststoffschale, und dort insbesondere der Boden 1, schon im Spritzgießwerkzeug an die in dieses eingelegte Textileinlage 4 angespritzt worden ist. Die Textileinlage 4 ist also mittels einer Schmelzverbindung stoffschlüssig mit dem Kunststoffteil der Kunststoffschale verbunden.

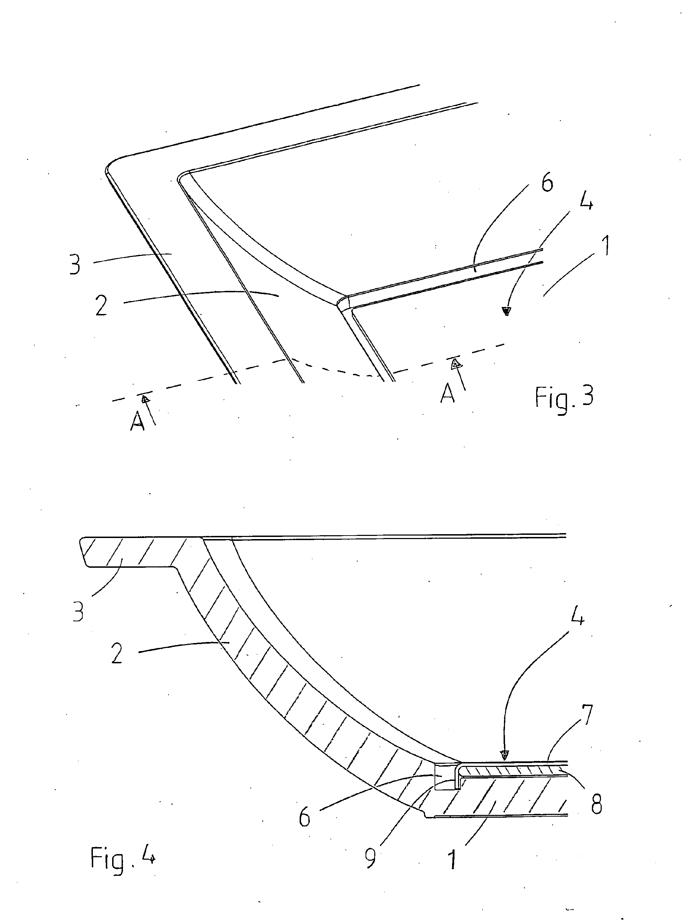

Die Figuren 3 und 4 zeigen Details konkret umgesetzter vorteilhafter Ausgestaltungen der vorliegenden Erfindung, wobei Figur 3 das Detail X aus Figur 1 darstellt, also eine perspektivische Ansicht ist, während Figur 4 einen Schnitt entlang der Linie A ― A aus Figur 3 zeigt:
Der Boden 1 der Kunststoffschale, der mit der Textileinlage 4 belegt ist, wird von einer umlaufenden Nut 6 begrenzt und hierdurch von den Randflächen 2 der Kunststoffschale abgesetzt. Die besonderen Vorteile dieser Nut 6 ergeben sich aus Figur 4, in der dargestellt ist, dass die obere Schicht 7 der Textileinlage 4,
hier also die Lederschicht, mit ihrem äußeren Rand 9 in die Nut 6 hineinreicht und dort nach unten umgebogen ist. Die Textileinlage 4 besteht neben der oberen Lederschicht 7 außerdem aus einer elastischen, unteren Schicht 8, die vorliegend aus Schaumstoff oder aus Moosgummi gebildet ist. Diese untere elastische Schicht 8 reicht nur bis zur Nut 6 heran, aber nicht über diese hinaus oder in diese hinein.

Dadurch, dass der Rand 9 der oberen (Leder-)Schicht 7 in die Nut 6 hinein abgebogen worden ist, sind die Anforderungen an die Maßhaltigkeit und an die Geradlinigkeit des Zuschnitts der Lederschicht 7 vorteilhaft gering. Denn etwaige Unregelmäßigkeiten oder Toleranzen sind, wie Figur 3 verdeutlicht, für den Benutzer nicht sichtbar. Die Umbiegekante der oberen Schicht 7 in die Nut 6 hinein stellt in jedem Fall eine optisch und haptisch einwandfreie Begrenzung des Bodens 1 sicher.

Die nachgiebige Schaumstoffschicht 8 unterhalb der abriebfesten oberen Schicht 7 gewährleistet einen sowohl optisch als auch haptisch und letztendlich auch akustisch hochwertigen Eindruck der Textileinlage 4 am Boden 1 der vorliegenden Kunststoffschale. Beispielsweise ein Schlüsselbund, der eher unachtsam in die Schale geworfen wird, bleibt mit einem gedämpften und leisten Geräusch auf dem Boden 1 der Kunststoffschale liegen. Ein Wiederergreifen des Schlüsselbundes ist aufgrund der leicht nachgiebigen Textileinlage 4 mit Lederoberfläche für den Benutzer sehr angenehm. Gleichwohl kann die in den Figuren dargestellte Kunststoffschale mit Textileinlage kostengünstig automatisiert in einem Arbeitsgang hergestellt werden.

## Patentansprüche

1. Kunststoffschale mit einem im wesentlichen ebenen Boden (1) und einer oder mehreren, an den Boden (1) angeformten, von diesem ausgehend nach oben abgewinkelten oder abgebogenen Randfläche(n) (2), wobei die Kunststoffschale im Spritzgussverfahren hergestellt ist, und wobei der Boden (1) mit einer Textileinlage (4) belegt ist,
**dadurch gekennzeichnet,**
**dass** die Kunststoffschale zur Herstellung einer Schmelzverbindung mit der Textileinlage (4) an diese angespritzt ist.

2. Kunststoffschale nach Anspruch 1
**dadurch gekennzeichnet,**
**dass** zwischen dem Boden (1) und den Randflächen (2) eine umlaufende Nut (6) vorgesehen ist.

3. Kunststoffschale nach Anspruch 2,
**dadurch gekennzeichnet,**
**dass** ein Rand (9) oder mehrere Ränder der Textileinlage (4) in die Nut (6) hinein nach unten abgebogen sind.

4. Kunststoffschale nach mindestens einem der Ansprüche 1 bis 3,
**dadurch gekennzeichnet,**
**dass** die Textileinlage (4) aus mehreren, insbesondere zwei Schichten (7, 8) besteht.

5. Kunststoffschale nach Anspruch 4,
**dadurch gekennzeichnet,**
**dass** die Textileinlage (4) eine obere Schicht (7) aus abriebfestem Material, insbesondere Leder, sowie eine darunterliegende Schicht (8) aus weichelastischem Material, insbesondere Schaumstoff oder Moosgummi, aufweist.

6. Kunststoffschale nach den Ansprüchen 3 und 4 oder 3 und 5,
**dadurch gekennzeichnet,**
**dass** nur die obere Schicht (7) der Textileinlage (4) Ränder (9) aufweist, die in die Nut (6) hinein nach unten abgebogen sind.

7. Kunststoffschale nach mindestens einem der Ansprüche 1 bis 6,
**dadurch gekennzeichnet,**
**dass** die Textileinlage (4) plattenförmig ausgebildet ist und insbesondere aus Filz, Moosgummi, Leder und dergleichen oder einer Kombination dieser Materialien besteht.
